# EUROPEAN PATENT SPECIFICATION

(11) **EP 3 413 661 B1**
(45) Date of publication and mention of the grant of the patent: **25.08.2021**
(21) Application number: 17812497.0
(22) Date of filing: 15.05.2017
(51) Int. Cl.: H04W 72/04, H04W 74/00, H04W 88/08, H04L 5/00

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(30) Priority: 14.06.2016 CN 201610416585
(43) Date of publication of application: 12.12.2018
(60) Divisional application: 21184137.4
(73) Proprietor: Huawei Technologies Co., Ltd., Longgang District Shenzhen, Guangdong 518129 (CN)
(72) Inventor: GAN, Ming, Shenzhen Guangdong 518129 (CN)
(74) Representative: Kreuz, Georg Maria
(86) International application number: PCT/CN2017/084378
(87) International publication number: WO 2017/215386

(56) References cited:
- WO-A1-2016/089059
- CN-A- 102 714 534
- CN-A- 105 517 118
- CN-A- 105 517 157
- US-A1- 2016 165 574

## Description

### TECHNICAL FIELD

Embodiments of the present invention relate to the field of wireless network technologies, and in particular, to a data transmission method and apparatus.

### BACKGROUND

With development of the mobile Internet and popularity of intelligent terminals, data traffic increases rapidly. A wireless local area network (Wireless Local Area Network , WLAN) becomes one of mainstream mobile broadband access technologies due to advantages of a high rate and low costs.

To significantly increase a service transmission rate of a WLAN system, in a next-generation Institute of Electrical and Electronics Engineers (Institute of Electrical and Electronics Engineers, IEEE) 802.11ax standard, an orthogonal frequency division multiple access (Orthogonal Frequency Division Multiple Access, OFDMA) technology is further used based on an existing orthogonal frequency division multiplexing (Orthogonal Frequency Division Multiplexing, OFDM,) technology. In the OFDMA technology, air interface radio channel time-frequency resources are divided into multiple orthogonal time-frequency resource unit (Resource Unit, RU)s. The RUs may share time, but are orthogonal in a frequency domain.

The OFDMA technology supports multiple nodes in simultaneously sending and receiving data. An access point (Access Point, AP) allocates different RUs to different STAs at a same moment, so that multiple STAs simultaneously and efficiently access a channel, thereby improving channel utilization.

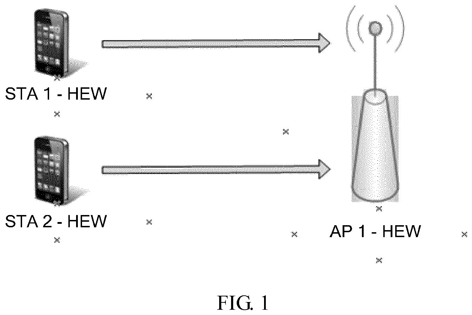

After the OFDMA technology is introduced into a next-generation WiFi system or an HEW system, uplink data transmission is no longer point-to-point transmission, but is multipoint-to-point transmission. As shown in FIG. 1, multiple STAs simultaneously transmit data to an AP at a same time on a same channel by using RUs allocated to the STAs. The multiple STAs are overlapped basic service set (Overlap Basic Service Set, OBSS) stations. However, in an existing design, when each STA transmits data to an AP, a common physical layer preamble (legacy preamble, repeated legacy-signal (Repeated Legacy-Signal, RL-SIG) field, and high efficient-signal field A (High Efficient-Signal field A , HE-SIG A)) needs to be repeatedly sent in each 20 MHz fundamental channel unit in channel bandwidth (BandWidth, BW), and a data part of the station is transmitted in an RU allocated to the station.

In the prior art, when a legacy 802.11a/b/n/ac station and 802.11ax station of another BSS perform detection according to a legacy clear channel assessment (Clear Channel Assessment, CCA) method, if energy on a 20 MHz channel is higher than a specified CCA level, it is considered that the 20 MHz channel is busy. Because a STA sends a common physical layer preamble on each fundamental channel unit, it is detected that multiple 20 MHz channels are occupied even though a data part of the station is transmitted on an RU in only one of the multiple 20 MHz channels. Consequently, in the transmission manner, another BSS station is prevented from contending for a 20 MHz channel without a data part, and this is not advantageous for improving spectrum utilization. Prior art EP 3229434A1 and prior art US2016/165574A1 discloses a STA receives a trigger frame including resource unit allocation information for OFDMA transmission, transmits a UL MU PPDU, and receives an ACK frame of the UL MU PPDU.

### SUMMARY

Embodiments of the present invention provide a data transmission method and apparatus. It is designed that a common physical layer preamble is sent on at least one fundamental channel unit in which a target RU is located to improve spectrum utilization. The object of the invention is achieved by the subject-matter of the independent claims. The dependent claims describe advantageous embodiments. The scope of protection of the invention is solely limited by the appended claims.

### BRIEF DESCRIPTION OF DRAWINGS

To describe the technical solutions in the embodiments of the present invention or in the background more clearly, the following briefly describes the accompanying drawings required for describing the embodiments of the present invention or the background.
FIG. 1 is a schematic diagram of an application scenario according to an embodiment of the present invention;
FIG. 2 is a schematic diagram of contention access in the prior art according to an embodiment of the present invention;
FIG. 3 is a physical layer format of a downlink OFDMA PPDU according to an embodiment of the present invention;
FIG. 4 is an existing physical layer format of an uplink OFDMA PPDU according to an embodiment of the present invention;
FIG. 5 is a flowchart of a data transmission method according to an embodiment of the present invention;
FIG. 6 is a physical layer format of an uplink OFDMA PPDU according to an embodiment of the present invention;
FIG. 7 is another physical layer format of an uplink OFDMA PPDU according to an embodiment of the present invention;
FIG. 8 is a diagram of an 80 MHz bandwidth frequency domain resource according to an embodiment of the present invention;
FIG. 9 is a diagram of a 160 MHz bandwidth frequency domain resource according to an embodiment of the present invention;
FIG. 10 is a physical layer format of an acknowledgement frame according to an embodiment of the present invention;
FIG. 11 is a schematic structural diagram of a data transmission apparatus according to an embodiment of the present invention; and
FIG. 12 is a schematic structural diagram of another data transmission apparatus according to an embodiment of the present invention.

### DESCRIPTION OF EMBODIMENTS

The following describes the embodiments of the present invention with reference to the accompanying drawings in the embodiments of the present invention.

The embodiments of the present invention may be applied to a wireless local area network (Wireless Local Area Network, WLAN). Currently, a standard used in the WLAN is Institute of Electrical and Electronics Engineers (Institute of Electrical and Electronics Engineers, IEEE) 802.11 series. The WLAN may include multiple basic service sets (Basic Service Sets , BSSs). A network node in the BSS is a station. The types of station includes an access point (Access Point, AP) type and a non-access pointstation(Non-Access Point Station, Non-AP STA) type. Each basic service set may include an AP and multiple non-AP STAs associated with the AP.

The access point type station is also referred to as a wireless access point, a hotspot, or the like. An AP is an access point by using which a mobile user enters a wired network. The AP is mainly deployed in home or within a building and a park with a typical coverage radius of tens to hundreds of meters, and certainly may also be deployed outdoors. The AP is equivalent to a bridge connecting a wired network and a wireless network. A main function of the AP is to connect wireless network clients, and then connect the wireless network to an Ethernet network. Specifically, the AP may be a terminal device or a network device with a WiFi (Wireless Fidelity,WiFi) chip. Optionally, the AP may be a device that supports the 802.11ax standard. Further, optionally, the AP may be a device that supports multiple WLAN standards, such as 802.11ac, 802.11n, 802.11g, 802.11b, and 802.11a.

The non-access point station (Non-Access Point Station, Non-AP STA) may be a wireless communications chip, a wireless sensor, or a wireless communications terminal, for example, may be a mobile phone that supports a WiFi communication function, a tablet computer that supports a WiFi communication function, a set top box that supports a WiFi communication function, a smart TV that supports a WiFi communication function, an intelligent wearable device that supports a WiFi communication function, an in-vehicle communications device that supports a WiFi communication function, and a computer that supports a WiFi communication function. Optionally, the STA may support the 802.11ax standard. Further, optionally, the station supports multiple WLAN standards, such as 802.11ac, 802.11n, 802.11g, 802.11b, and 802.11a.

Referring to FIG. 1, FIG. 1 is a schematic system diagram of a typical WLAN deployment scenario. One AP and two STAs are included in the scenario. The AP may separately communicate with a STA 1 and a STA 2.

A station in this embodiment of the present invention may be the STA in FIG. 1, and an access point may be an AP 1. In an existing Wi-Fi system, including a legacy system based on IEEE 802.11a, a system based on IEEE 802.1 In, and a system based on IEEE 802.11ac, uplink data transmission is point-to-point transmission. After an OFDMA technology is introduced, uplink data transmission is no longer point-to-point transmission, but is multipoint-to-point transmission. Specifically, in the OFDMA technology, air interface radio channel time-frequency resources are divided into multiple orthogonal RUs (or referred to as subchannels). The RUs may share time, but are orthogonal in a frequency domain. For uplink data transmission, multiple STAs simultaneously transmit data to an AP at a same time in a same spectrum by using multiple orthogonal RUs. Downlink data transmission is also no longer point-to-point transmission, but is point-to-multipoint transmission.

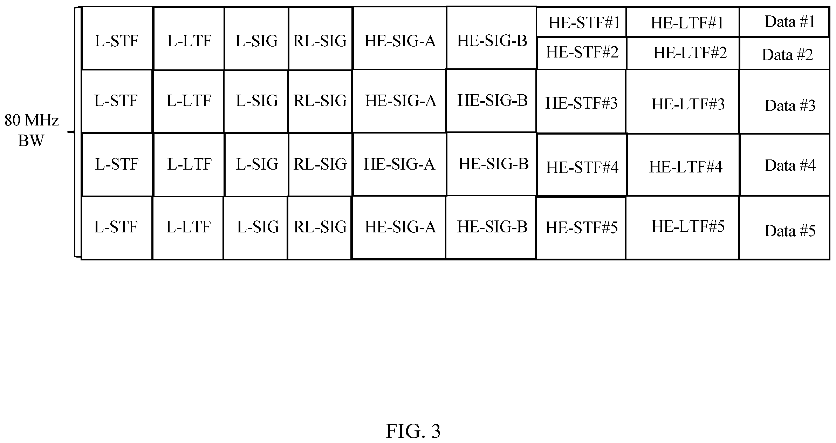

A downlink physical layer protocol data unit (Physical Layer Protocol Data Unit, PPDU) in an 802.11ax system may be compatible with a transmission frame format in a legacy WiFi system. A physical layer frame format of a transmission frame is shown in FIG. 3. The physical layer frame format includes a legacy preamble part, a repeated legacy-signal (Repeated Legacy-Signal, RL-SIG) field, a high efficient-signal field A (HE-SIG A), and a high efficient-signal field B (HE-SIG B). The legacy preamble includes a legacy short training sequence field, a legacy long training sequence field, a legacy signaling field. The HE-SIG A includes bandwidth BW, an inter-symbol guard interval, a length of the HE-SIG B, and common signaling configured by means of modulation and coding and the like. The HE-SIG B is used to indicate related information such as resource allocation for a target station. The legacy preamble, the RL-SIG, and the HE-SIG A need to be repeatedly sent on a 20 MHz channel. The HE-SIG B may be flexibly processed, and may be or may not be repeated. If a transmitted data packet or unit is a downlink OFDMA PPDU, an AP end sends the OFDMA PPDU to multiple stations, and each station may be allocated one RU in OFDMA bandwidth. The BW includes multiple 20 MHz channels, and an RU may be less than a 20 MHz bandwidth. In addition to that the legacy preamble, the RL-SIG, and the HE-SIG A are sent on a primary 20 MHz channel, the legacy preamble, the RL-SIG, and the HE-SIG A are repeatedly sent on other 20 MHz channels, so that it can be ensured that a downlink OFDMA station is not interfered with by burst signals on the channels in the BW.

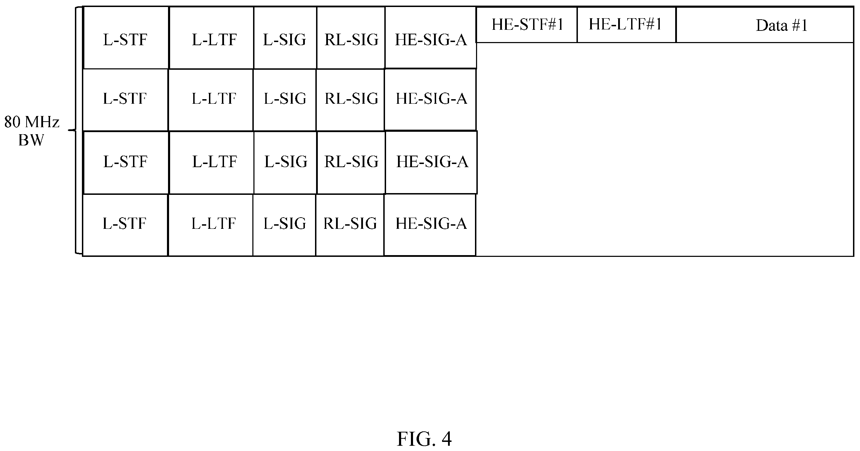

In the prior art, a design of an uplink OFDMA PPDU is similar to that of the downlink OFDMA PPDU. An OFDMA PPDU packet is generated/received by means of fast Fourier transform (Fast Fourier transform, FFT) or inverse fast Fourier transform (Inverse Fast Fourier Transform, IFFT) that matches BW. If the BW includes multiple 20 MHz (a size of a fundamental channel unit) channels, the legacy preamble, the RL-SIG, and the HE-SIG A in the foregoing part are repeatedly sent on each 20 MHz channel in the BW. However, a data part of an uplink station is transmitted only in a frequency domain resource unit (RU) allocated to the uplink station. For example, the RU is less than 20 MHz, as shown in FIG. 4. Herein, an uplink frame format is symmetrical to a downlink frame format. A difference may lie in that, the HE-SIG B part used to indicate resource allocation may be omitted only in uplink OFDMA transmission.

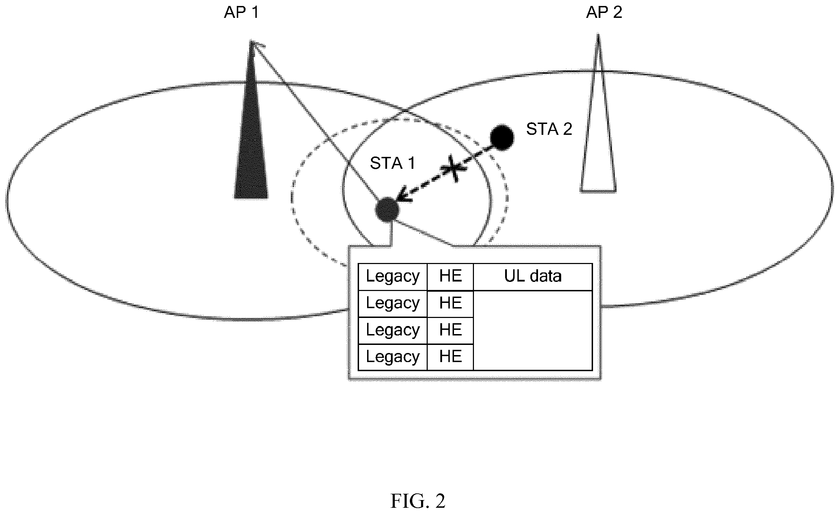

Referring to FIG. 2, if the foregoing uplink OFDMA PPDU transmission manner is used, and a legacy 802.11a/b/n/ac station and 802.11ax station of another BSS perform detection according to legacy CCA, it is detected that multiple channels are occupied even though a data part of the station is transmitted only on one 20 MHz channel in the multiple channels. As shown in FIG. 2, a data part of a STA 1 is transmitted on an RU in only one 20 MHz fundamental channel unit, but a legacy preamble part occupies all fundamental channel units of entire bandwidth. A STA 2 detects that each fundamental channel unit is occupied, and does not perform contention access. Consequently, spectrum utilization is reduced.

For the foregoing problem, in the embodiments of the present invention, when a station STA sends an uplink OFDMA PPDU, a data part of the OFDMA PPDU is sent on an allocated target RU, and a common physical layer preamble of the OFDMA PPDU is sent on at least one fundamental channel unit in which the target RU is located.

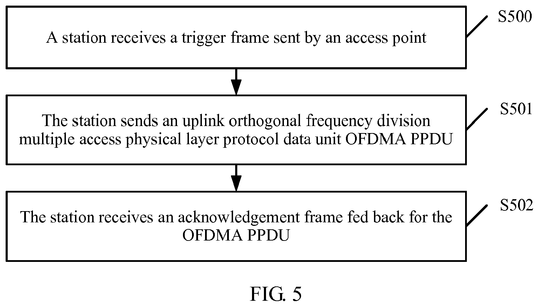

A data transmission method provided in the embodiments of the present invention is described below with reference to FIG. 5 to FIG. 10.

Referring to FIG. 5, FIG. 5 is a schematic flowchart of a data transmission method according to an embodiment of the present invention. As shown in FIG. 5, the data transmission method includes the following steps.

S500: A station receives a trigger frame sent by an access point, where the trigger frame includes an identifier of a target frequency domain resource unit RU allocated to the station.

In this embodiment of the present invention, the station is a non-access point station such as any STA in FIG. 1 or FIG. 2. The trigger frame is a frame that is used to indicate resource allocation and that is sent by the access point AP to the station STA. The trigger frame includes the identifier of the target RU allocated to the station. After receiving the trigger frame, the station can obtain the allocated target RU by parsing the trigger frame. The station may send uplink data on the target RU.

S501: The station sends an uplink orthogonal frequency division multiple access physical layer protocol data unit (Orthogonal Frequency Division Multiple Access Physical Layer Protocol Data Unit, OFDMA PPDU), where a data part of the uplink OFDMA PPDU is sent on the target RU, and a common physical layer preamble of the uplink OFDMA PPDU is sent on at least one fundamental channel unit in which the target RU is located.

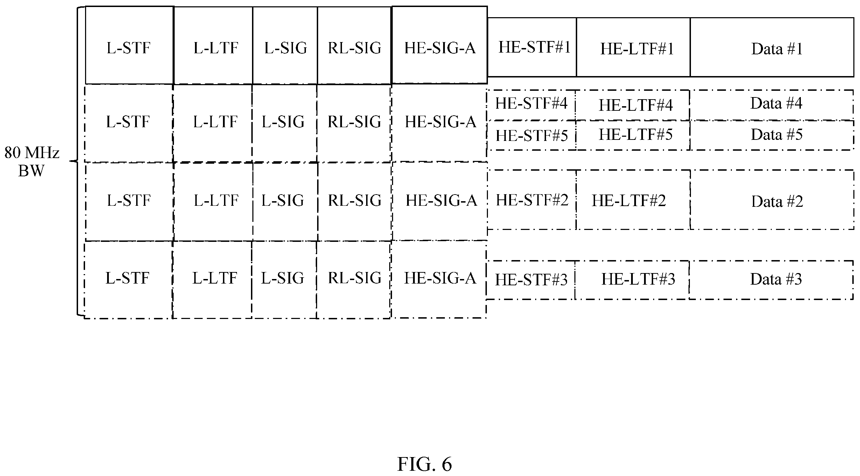

In an optional implementation, for transmission of the uplink OFDMA PPDU scheduled by the AP, the data part (including data or a Medium Access Control (Medium Access Control, MAC) signaling part) of the station STA is sent on the allocated target RU. The target RU may be in a fundamental channel unit (such as 20 MHz) channel. As shown in FIG. 6, a data part (HE-STF#1, HE-LTF#1, and Data#1) of a station 1 is sent on a target RU. A common physical layer preamble (including legacy preamble, RL-SIG, and HE-SIG A) of the station 1 is sent on a fundamental channel unit (such as a 20 MHz channel) that includes the target RU, that is, sent in a fundamental channel unit in which the target RU is located. It should be noted that a channel on which the legacy preamble, the RL-SIG, and the HE-SIG A are sent is in a minimum unit of 20 MHz. The legacy preamble, the RL-SIG, and the HE-SIG A are not sent on another fundamental channel unit in BW. As shown in FIG. 6, frequency domain resources occupied when other stations perform transmission are represented by dashed lines.

In another optional implementation, for transmission of the uplink OFDMA PPDU scheduled by the AP, the data part (including data or a MAC control signaling part) of the uplink station is sent on the allocated target RU. The target RU spans multiple fundamental channel units (for example, each fundamental channel unit is a 20 MHz channel), and the common physical layer preamble of the station is repeatedly sent on the multiple fundamental channel units spanned by the target RU.

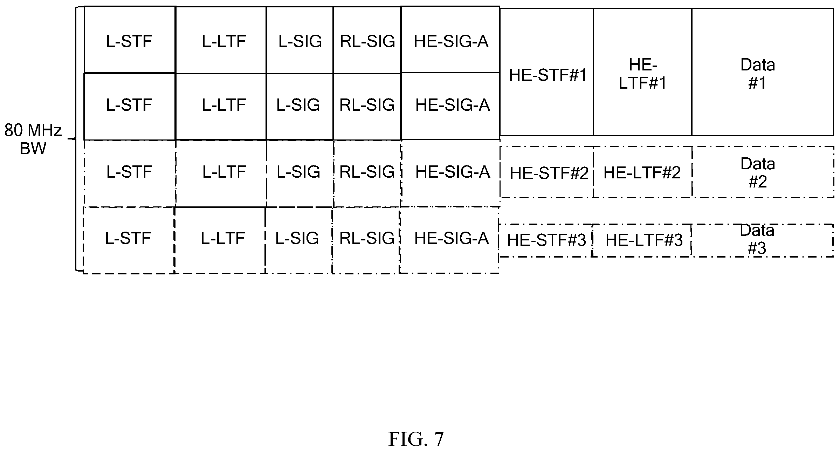

As shown in FIG. 7, a target RU of a station 1 spans two fundamental channel units. A data part of the station 1 (HE-STF#1, HE-LTF#1, and Data#1) is sent on the target RU, and a common physical layer preamble (including legacy preamble, RL-SIG, and HE-SIG A) of the station 1 is repeatedly sent on the two 20 MHz channels spanned by the target RU, that is, common physical layer preambles on all the 20 MHz channels are the same. The legacy preamble, the RL-SIG, and the HE-SIG A are not sent on another fundamental channel unit in entire channel BW. As shown in FIG. 7, OFDMA PPDUs transmitted by other stations are represented by dashed lines.

It should be understood that, the foregoing repeated sending may further include multiplying the repeatedly-transmitted common physical layer preamble by a rotating factor, so as to reduce a peak-to-average ratio. This is not limited herein.

In the foregoing two optional implementations, when a station sends an uplink OFDMA PPDU, a data part of the station is transmitted on a target RU scheduled by an AP, and a common physical layer preamble (legacy preamble, RL-SIG, and HE-SIG A) is transmitted only on at least one fundamental channel unit (such as a 20 MHz channel) in which the target RU is located. If the target RU spans multiple 20 MHz channels, the legacy preamble, the RL-SIG, and the HE-SIG A are repeatedly transmitted on the multiple 20 MHz channels. In the method, disadvantages in the prior art are avoided, and another BSS station can contend for a 20 MHz channel without a data part, to improve spectrum utilization.

In an uplink OFDMA PPDU, each station sends a common physical layer preamble only on a 20 MHz channel in which a target RU occupied by a data part is located. That is, the station prevents only the 20 MHz channel in which the data part is located from being preempted by another BSS station. For example, in the first optional implementation, it is assumed that total transmission bandwidth is 80 MHz, the station 1 is scheduled by the AP to transmit data on a target RU in the first 20 MHz channel, and another station is scheduled to transmit data on another 20 MHz channel. A method for sending a common physical layer preamble (legacy preamble, RL-SIG, and HE-SIG A) by a station is shown in FIG. 6. Because the common physical layer preamble is transmitted only on the first 20 MHz channel, a hidden node (another BSS station) of the station 1 may preempt another 20 MHz channel such as the second 20 MHz channel that is not protected by the station 1.

Optionally, if the target RU is a default resource unit in a channel frequency domain resource center, and the target RU is not in any fundamental channel unit,
the station skips sending the common physical layer preamble; or
the station repeatedly sends the common physical layer preamble on all fundamental channel units; or
the station sends the common physical layer preamble on one or two fundamental channel units adjacent to the target RU.

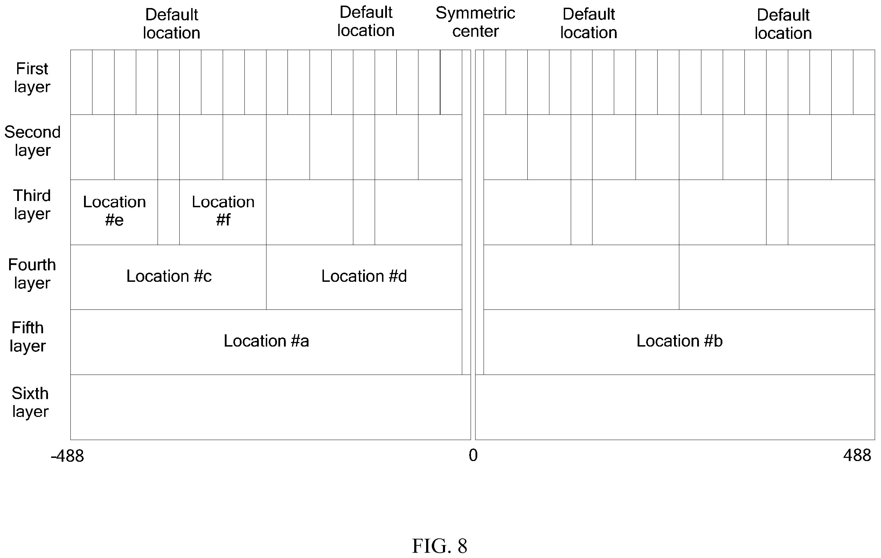

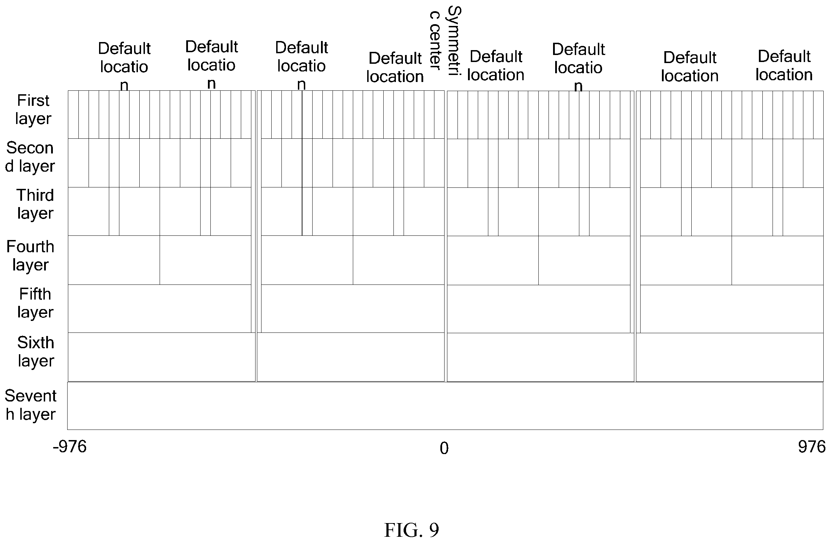

In this embodiment of the present invention, the target RU allocated by the AP to the station STA is a default resource unit in a channel frequency domain resource center, and the target RU is not in any fundamental channel unit, such as an 80 MHz bandwidth channel frequency domain resource and a 160 MHz bandwidth channel frequency domain resource. As shown in FIG. 8, FIG. 8 is a schematic diagram of an 80 MHz bandwidth channel frequency domain resource. As shown in the figure, an RU (for example, a quantity of subcarriers is 26) in a symmetric center of the channel frequency domain resource is not in any 20 MHz fundamental channel unit. As shown in FIG. 9, FIG. 9 is a schematic diagram of a 160 MHz bandwidth channel frequency domain resource. As shown in the figure, the channel frequency domain resource is equivalent to a combination of two 80 MHz bandwidth channel frequency domain resources. Therefore, for each 80 MHz bandwidth channel frequency domain resource, an RU is still not in any 20 MHz fundamental channel unit.

If the target RU allocated to the station is a default resource unit that is not in any fundamental channel unit, the station may not send the common physical layer preamble, or the station repeatedly sends the common physical layer preamble on all fundamental channel units, or the station sends the common physical layer preamble on one or two fundamental channel units adjacent to the target RU.

S502: The station receives an acknowledgement frame fed back for the uplink OFDMA PPDU.

Optionally, the acknowledgement frame of the station is sent by the access point on an RU selected by the access point from the at least one fundamental channel unit; or
the access point encapsulates the acknowledgement frame of the station as an encapsulation packet and then sends the encapsulation packet on an RU in the at least one fundamental channel unit, where the encapsulation packet includes acknowledgement frames fed back by the access point of multiple stations.

In this embodiment of the present invention, after receiving the uplink OFDMA PPDU, the AP replies to the uplink OFDMA PPDU with the acknowledgement frame. There are generally two types of acknowledgement frames with which the AP replies. One type of acknowledgement frame is an OFDMA-BA (block acknowledgement), and the other type of acknowledgement frame is an OFDMA M-BA (Multi-STA block acknowledgement). In addition, there is a type of acknowledgement frame obtained in a manner of combining the two types of frames. The OFDMA M-BA frame that is multiple M-BA frames that are sent by using an orthogonal OFDMA subchannel.

Optionally, if the AP replies to the received uplink OFDMA PPDU with an OFDMA-BA or an OFDMA M-BA, the AP needs to transmit an acknowledgement frame of a station on at least one 20 MHz channel in which a target RU occupied by a transmitted data part of the station is located. If the target RU spans multiple 20 MHz channels, the AP may select one or more 20 MHz channels to transmit the acknowledgement frame of the station.

Specifically, the access point selects an RU from at least one 20 MHz channel in which the target RU is located to transmit the acknowledgement frame. The RU for transmitting the acknowledgement frame and the target RU may be the same or may be different. The access point may encapsulate acknowledgement frames of multiple stations as an encapsulation packet, and select an RU from the at least one 20 MHz channel to transmit the encapsulation packet.

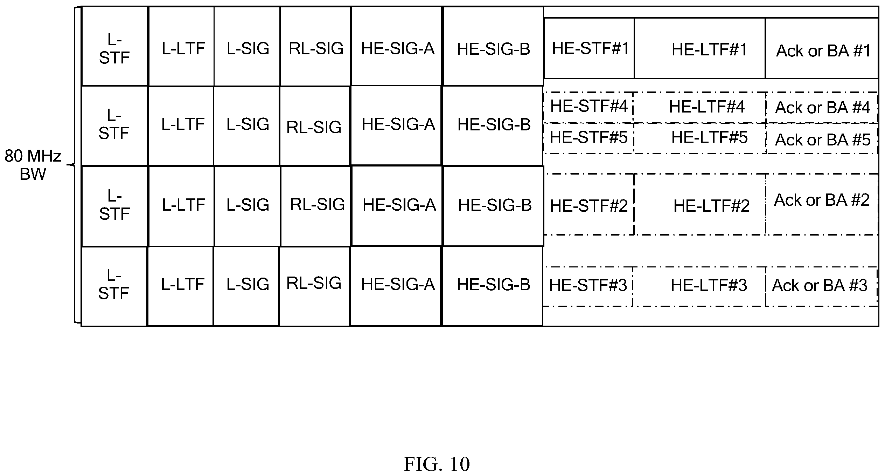

FIG. 6 is used as an example for description. If the AP replies with an OFDMA-BA, the AP needs to transmit an acknowledgement frame ((acknowledgement frame, ACK) or BA) of the station 1 on the first 20 MHz fundamental channel unit. As shown in FIG. 10, the acknowledgement frame of the station 1 is transmitted on the first 20 MHz fundamental channel unit. If the AP replies with an OFDMA M-BA, the OFDMA M-BA frame transmitted on the first 20 MHz channel by the AP needs to include the acknowledgement frame of the station 1.

In addition, if neither the OFDMA BA nor the OFDMA M-BA with which the AP replies is on a primary fundamental channel unit (such as a primary 20 MHz channel), the AP needs to transmit a preset frame on the primary 20 MHz channel. The preset frame may include but is not limited to a quality of service null frame (quality of service null frame, QoS Null), a padding data frame, or a data frame, a control frame, and a management frame that are transmitted to a station. Therefore, the primary 20 MHz channel is prevented from being preempted by another station, and accordingly, a transmission opportunity is not lost. It should be noted that, a reason why the acknowledgement frame is not on the primary 20 MHz channel may include but is limited to a reason that the AP does not correctly receive information on the primary 20 MHz channel.

Optionally, if neither the OFDMA BA nor the OFDMA M-BA with which the AP replies is on a 20 MHz channel other than a primary 20 MHz channel, the AP needs to transmit a preset frame structure on the 20 MHz channel. The preset frame may include but is not limited to a QoS null frame, a padding data frame, or a data frame, a control frame, and a management frame that are transmitted to a station. Therefore, the 20 MHz channel is prevented from being preempted by another station, and accordingly, a transmission opportunity on the 20 MHz channel is not lost.

It should be noted that, the acknowledgement frame for the downlink OFDMA PPDU is sent by the AP. As shown in FIG. 10, legacy preamble, RL-SIG, and HE-SIG A are repeatedly transmitted on each 20 MHz channel, and HE-SIG B is transmitted on a unit of 20 MHz, and HE-SIG B transmitted on 20 MHz channels may be different. In a manner, the HE-SIG B is divided into HE-SIG B1 and HE-SIG B2, that is, a [1 2 1 2] transmission structure is used. That is, same HE-SIG B is transmitted on spaced fundamental channel units.

In this embodiment of the present invention, the station receives the trigger frame sent by the access point. The trigger frame includes the identifier of the target RU allocated to the station. The station sends the uplink OFDMA PPDU. The data part of the uplink OFDMA PPDU is sent on the target RU, and the common physical layer preamble of the uplink OFDMA PPDU is sent on at least one fundamental channel unit in which the target RU is located. The station receives the acknowledgement frame fed back for the uplink OFDMA PPDU. In this manner, a common physical layer preamble of an uplink OFDMA PPDU is sent only on at least one fundamental channel unit in which an allocated target RU is located. Therefore, spectrum resources occupied by the common physical layer preamble are reduced, so that more stations contend for access to a channel, thereby improving spectrum utilization.

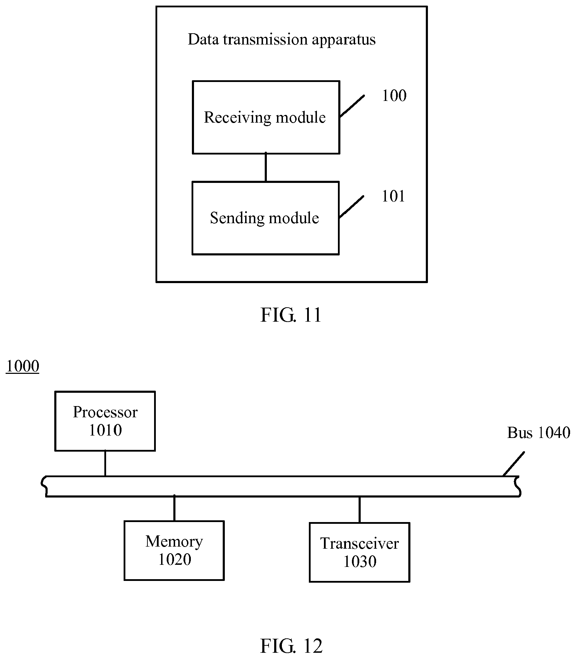

A specific implementation of a data transmission apparatus provided in the embodiments of the present invention is described below with reference to FIG. 11 and FIG. 12.

Referring to FIG. 11, FIG. 11 is a schematic structural diagram of a data transmission apparatus provided in an embodiment of the present invention. The data transmission apparatus may be applied to a station such as any station STA in FIG. 2. As shown in FIG. 11, the data transmission apparatus in this embodiment includes a receiving module 100 and a sending module 101.

The receiving module 100 is configured to receive a trigger frame sent by an access point. The trigger frame includes an identifier of a target frequency domain resource unit RU allocated to the station.

The sending module 101 is configured to send an uplink orthogonal frequency division multiple access physical layer protocol data unit (Orthogonal Frequency Division Multiple Access Physical Layer Protocol Data Unit ,OFDMA PPDU). A data part of the uplink OFDMA PPDU is sent on the target RU, and a common physical layer preamble of the uplink OFDMA PPDU is sent on at least one fundamental channel unit in which the target RU is located.

Optionally, if the fundamental channel unit in which the target RU is located includes at least two fundamental channel units,
the common physical layer preamble of the uplink OFDMA PPDU is repeatedly sent on each of the at least two fundamental channel units.

The common physical layer preamble includes a legacy preamble field, a repeated legacy-signal (Repeated Legacy-Signal, RL-SIG) field, and a high efficient-signal field A (High Efficient-Signal field A, HE-SIG A).

Optionally, if the target RU is a default resource unit in a channel frequency domain resource center, and the target RU is not in any fundamental channel unit,
the station skips sending the common physical layer preamble; or
the sending module 101 of the station repeatedly sends the common physical layer preamble on all fundamental channel units; or
the sending module 101 of the station sends the common physical layer preamble on one or two fundamental channel units adjacent to the target RU.

The receiving module 100 is further configured to receive an acknowledgement frame fed back for the uplink OFDMA PPDU.

Optionally, the acknowledgement frame of the station is sent by the access point on an RU selected by the access point from the at least one fundamental channel unit; or
the access point encapsulates the acknowledgement frame of the station as an encapsulation packet and then sends the encapsulation packet on an RU in the at least one fundamental channel unit, where the encapsulation packet includes acknowledgement frames fed back by the access point for multiple stations.

Optionally, if the acknowledgement frame fed back by the access point to the station is not on a primary fundamental channel unit, the access point transmits a preset frame on the primary fundamental channel unit.

It should be noted that, for specific implementations of modules in the data transmission apparatus, reference may be further made to related description in the method embodiment.

In this embodiment of the present invention, the station receives the trigger frame sent by the access point. The trigger frame includes the identifier of the target RU allocated to the station. The station sends the uplink OFDMA PPDU. The data part of the uplink OFDMA PPDU is sent on the target RU, and the common physical layer preamble of the uplink OFDMA PPDU is sent on the at least one fundamental channel unit in which the target RU is located. The station receives the acknowledgement frame fed back for the uplink OFDMA PPDU. In this manner, a common physical layer preamble of an uplink OFDMA PPDU is sent only on at least one fundamental channel unit in which an allocated target RU is located. Therefore, spectrum resources occupied by the common physical layer preamble are reduced, so that more stations contend for access to a channel, thereby improving spectrum utilization.

Referring to FIG. 12, FIG. 12 is a schematic structural diagram of another data transmission apparatus provided in an embodiment of the present invention. The data transmission apparatus may be applied to a station. The data transmission apparatus 1000 includes a processor 1010, a memory 1020, and a transceiver 1030. A station to which the data transmission apparatus is applied may be the STA shown in FIG. 1 or the STA shown in FIG. 2.

Specifically, the processor 1010 controls an operation of the data transmission apparatus 1000. The memory 1020 may include a read-only memory and a random access memory, and provide an instruction and data to the processor 1010. The processor may be a general-purpose processor, a digital signal processor, an application-specific integrated circuit, a field programmable gate array, or another programmable logic device. A part of the memory 1020 may further include a nonvolatile random access memory (nonvolatile random access memory, NVRAM). All components of the data transmission apparatus 1000 are coupled together by using a bus 1040. In addition to a data bus, the bus system 1040 further includes a power bus, a control bus, and a status signal bus. However, for clear description, various types of buses in the figure are marked as the bus system 1040. It should be noted that, the description about the data transmission apparatus may be applied to a subsequent embodiment.

The transceiver 1030 is configured to receive a trigger frame sent by an access point. The trigger frame includes an identifier of a target frequency domain resource unit RU allocated to the station.

The transceiver 1030 is further configured to send an uplink orthogonal frequency division multiple access physical layer protocol data unit (Orthogonal Frequency Division Multiple Access Physical Layer Protocol Data Unit ,OFDMA PPDU). A data part of the uplink OFDMA PPDU is sent on the target RU, and a common physical layer preamble of the uplink OFDMA PPDU is sent on at least one fundamental channel unit in which the target RU is located.

The transceiver 1030 is further configured to receive an acknowledgement frame fed back for the uplink OFDMA PPDU.

Optionally, if the fundamental channel unit in which the target RU is located includes at least two fundamental channel units,
the common physical layer preamble of the OFDMA PPDU is repeatedly sent on each of the at least two fundamental channel units.

The common physical layer preamble includes a legacy preamble field, a repeated legacy-signal (Repeated Legacy-Signal, RL-SIG) field, and high efficient-signal field A (High Efficient-Signal field A, HE-SIG A).

Further, optionally, if the target RU is a default resource unit in a channel frequency domain resource center, and the target RU is not in any fundamental channel unit,
the station skips sending the common physical layer preamble; or
the transceiver 1030 of the station repeatedly sends the common physical layer preamble on all fundamental channel units; or
the transceiver 1030 of the station sends the common physical layer preamble on one or two fundamental channel units adjacent to the target RU.

Optionally, the acknowledgement frame of the station is sent by the access point on an RU selected by the access point from the at least one fundamental channel unit; or
the access point encapsulates the acknowledgement frame of the station as an encapsulation packet and then sends the encapsulation packet on an RU in the at least one fundamental channel unit, where the encapsulation packet includes acknowledgement frames fed back by the access point of multiple stations.

Optionally, if the acknowledgement frame fed back by the access point to the station is not on a primary fundamental channel unit, the access point transmits a preset frame structure on the primary fundamental channel unit.

It should be noted that, for specific implementations of components in the data transmission apparatus, reference may be further made to related description in the method embodiment.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium includes: any medium that can store program code, such as a read-only memory (Read-Only Memory, ROM), a random access memory (Random Access Memory, RAM), a magnetic disk, or an optical disc.

## Claims

1. A data transmission method, comprising:
receiving, by a station, a trigger frame sent by an access point, wherein the trigger frame comprises an identifier of a target frequency-domain resource unit, RU, allocated to the station;
sending, by the station, an uplink orthogonal frequency division multiple access physical layer protocol data unit, OFDMA PPDU, wherein a data part of the uplink OFDMA PPDU is sent on the target RU, and a common physical layer preamble of the uplink OFDMA PPDU is sent on one or more channel units in which the target RU is located; and
receiving, by the station, a downlink OFDMA PPDU comprising an acknowledgement frame for the uplink OFDMAPPDU, wherein the acknowledgement frame is received on a RU which is in the one or more channel units.

2. A data transmission method, comprising:
sending, by an access point, a trigger frame, wherein the trigger frame comprises an identifier of a target frequency domain resource unit, RU, allocated to a station;
receiving, by the access point, an uplink orthogonal frequency division multiple access physical layer protocol data unit OFDMA PPDU, wherein a data part of the uplink OFDMA PPDU is received on the target RU allocated to the station, and a common physical layer preamble of the uplink OFDMA PPDU is received on one or more channel units in which the target RU is located; and
sending, by the access point, a downlink OFDMA PPDU comprising an acknowledgement frame for the uplink OFDMAPPDU, wherein the acknowledgement frame is sent on a RU which is in the one or more channel units.

3. The method according to claim 1 or 2, wherein the acknowledgement frame comprises an Ack frame, a Block Ack frame, or a Multi-STABlock Ack frame, wherein the Multi-STA Block Ack frame comprises an acknowledgement frame of the station.

4. The method according to any one of claims 1 to 3, wherein, if the target RU is located in multiple channel units, the common physical layer preamble of the uplink OFDMA PPDU is repeatedly sent on each of the multiple channel units.

5. The method according to any one of claims 1 to 4, wherein the common physical layer preamble comprises a legacy preamble field, a repeated legacy signal field, and a high-efficient signal A field.

6. The method according to any one of claims 1 to 5, wherein the data part comprises a high-efficient short training field, a high-efficient long training field, and a data field.

7. The method according to any one of claims 1 to 4, wherein the downlink OFDMA PPDU further comprises a legacy preamble field, a repeated legacy signal field, a high-efficient signal Afield, a high-efficient signal B field, a high-efficient short training field, a high-efficient long training field, and a data field.

8. The method according to claim 7, wherein the legacy preamble field, the repeated legacy signal field, and the high-efficient signal Afield are repeatedly received on each channel unit.

9. The method according to claim 7 or 8, wherein the high-efficient signal B field is received on a unit of channel unit, and the high-efficient signal B field received on channel units is different.

10. The method according to claim 9, wherein the high-efficient signal B field is divided into a high-efficient signal B1 field and a high-efficient signal B2 field, the high-efficient signal B1 field is received on spaced channel units, and the high-efficient signal B2 field is received on spaced channel units.

11. The method according to any one of claims 1 to 10, wherein the channel unit is a 20-MHz channel.

12. A station, comprising:
a receiving module, configured to receive a trigger frame sent by an access point, wherein the trigger frame comprises an identifier of a target frequency-domain resource unit, RU, allocated to the station; and
a sending module, configured to send an uplink orthogonal frequency division multiple access physical layer protocol data unit OFDMA PPDU, wherein a data part of the uplink OFDMA PPDU is sent on the target RU, and a common physical layer preamble of the uplink OFDMA PPDU is sent on one or more channel units in which the target RU is located,
wherein the receiving module is further configured to receive a downlink OFDMA PPDU comprising an acknowledgement frame for the uplink OFDMA PPDU, wherein the acknowledgement frame is received on a RU which is in the one or more channel units.

13. An access point, comprising:
a sending module, configured to send a trigger frame, wherein the trigger frame comprises an identifier of a target frequency-domain resource unit, RU, allocated to a station; and
a receiving module, configured to receive an uplink orthogonal frequency division multiple access physical layer protocol data unit, OFDMA PPDU, wherein a data part of the uplink OFDMA PPDU is received on the target RU allocated to the station, and a common physical layer preamble of the uplink OFDMA PPDU is received on one or more channel units in which the target RU is located,
wherein the sending module is further configured to send a downlink OFDMA PPDU comprising an acknowledgement frame for the uplink OFDMA PPDU, wherein the acknowledgement frame is sent on a RU which is in the one or more channel units.

14. The apparatus according to claim 12 or 13, wherein the acknowledgement frame comprises an Ack frame, a Block Ack frame, or a Multi-STA Block Ack frame, wherein the Multi-STA Block Ack frame comprises an acknowledgement frame of the station.

15. The apparatus according to any one of claims 12 to 14, wherein, if the target RU is located in multiple channel units, the common physical layer preamble of the uplink OFDMA PPDU is repeatedly sent on each of the multiple channel units.

16. The apparatus according to any one of claims 12 to 15, wherein the common physical layer preamble comprises a legacy preamble field, a repeated legacy signal field, and a high-efficient signal A field.

17. The apparatus according to any one of claims 12 to 16, wherein the data part comprises a high-efficient short training field, a high-efficient long training field, and a data field.

18. The apparatus according to any one of claims 12 to 17, wherein the downlink OFDMA PPDU further comprises a legacy preamble field, a repeated legacy signal field, a high-efficient signal Afield, a high-efficient signal B field, a high-efficient short training field, a high-efficient long training field, and a data field.

19. The apparatus according to claim 18, wherein the legacy preamble field, the repeated legacy signal field, and the high-efficient signal Afield are repeatedly received on each channel unit.

20. The apparatus according to claim 18 or 19, wherein the high-efficient signal B field is received on a unit of channel unit, and the high-efficient-signal B field received on channel units is different.

21. The apparatus according to claim 20, wherein the high-efficient signal B field is divided into a high-efficient signal B1 field and a high-efficient signal B2 field, the high-efficient signal B1 field is received on spaced channel units, and the high-efficient signal B2 field is received on spaced channel units.

22. The apparatus according to any one of claims 12 to 21, wherein the channel unit is a 20-MHz channel.

23. A computer-readable storage medium storing a program, wherein the program, when executed, is configured to cause the computer to perform the method of any one of claims 1 to 11.

## Patentansprüche

1. Datenübertragungsverfahren, umfassend:
Empfangen, durch eine Station, eines Auslöserahmens, der durch einen Zugangspunkt gesendet wird, wobei der Auslöserahmen eine Kennung einer Ziel-Frequenzbereich-Ressourceneinheit, RU, die der Station zugewiesen ist, umfasst;
Senden, durch die Station, einer Uplink-Orthogonal-Frequenzmultiplex-Mehrfachzugriff-Bitübertragungsschicht-Protokolldateneinheit bzw. Uplink-OFDMA-PPDU, wobei ein Datenteil der Uplink-OFDMA-PPDU auf der Ziel-RU gesendet wird und eine gemeinsame Bitübertragungsschicht-Präambel der Uplink-OFDMA-PPDU auf einer oder mehreren Kanaleinheiten, in denen sich die Ziel-RU befindet, gesendet wird; und
Empfangen, durch die Station, einer Downlink-OFDMA-PPDU, die einen Bestätigungsrahmen für die Uplink-OFDMA-PPDU umfasst, wobei der Bestätigungsrahmen auf einer RU empfangen wird, die sich in der einen oder den mehreren Kanaleinheiten befindet.

2. Datenübertragungsverfahren, umfassend:
Senden, durch einen Zugangspunkt, eines Auslöserahmens, wobei der Auslöserahmen eine Kennung einer Ziel-Frequenzbereich-Ressourceneinheit, RU, die einer Station zugewiesen ist, umfasst;
Empfangen, durch den Zugangspunkt, einer Uplink-Orthogonal-Frequenzmultiplex-Mehrfachzugriff-Bitübertragungsschicht-Protokolldateneinheit bzw. Uplink-OFDMA-PPDU, wobei ein Datenteil der Uplink-OFDMA-PPDU auf der der Station zugewiesenen Ziel-RU empfangen wird und eine gemeinsame Bitübertragungsschicht-Präambel der Uplink-OFDMA-PPDU auf einer oder mehreren Kanaleinheiten, in denen sich die Ziel-RU befindet, empfangen wird; und
Senden, durch den Zugangspunkt, einer Downlink-OFDMA-PPDU, die einen Bestätigungsrahmen für die Uplink-OFDMA-PPDU umfasst, wobei der Bestätigungsrahmen auf einer RU gesendet wird, die sich in der einen oder den mehreren Kanaleinheiten befindet.

3. Verfahren nach Anspruch 1 oder 2, wobei der Bestätigungsrahmen einen Ack-Rahmen, einen Block-Ack-Rahmen oder einen Mehrfach-STA-Block-Ack-Rahmen umfasst, wobei der Mehrfach-STA-Block-Ack-Rahmen einen Bestätigungsrahmen der Station umfasst.

4. Verfahren nach einem der Ansprüche 1 bis 3, wobei, falls sich die Ziel-RU in mehreren Kanaleinheiten befindet, die gemeinsame Bitübertragungsschicht-Präambel der Uplink-OFDMA-PPDU wiederholt auf jeder der mehreren Kanaleinheiten gesendet wird.

5. Verfahren nach einem der Ansprüche 1 bis 4, wobei die gemeinsame Bitübertragungsschicht-Präambel ein "Legacy"-Präambel-Feld, ein Wiederholtes-"Legacy"-Signal-Feld und ein Hocheffizienz-Signal-A-Feld umfasst.

6. Verfahren nach einem der Ansprüche 1 bis 5, wobei der Datenteil ein Hocheffizienz-Kurztraining-Feld, ein Hocheffizienz-Langtraining-Feld und ein Daten-Feld umfasst.

7. Verfahren nach einem der Ansprüche 1 bis 4, wobei die Downlink-OFDMA-PPDU ferner ein "Legacy"-Präambel-Feld, ein Wiederholtes-"Legacy"-Signal-Feld, ein Hocheffizienz-Signal-A-Feld, ein Hocheffizienz-Signal-B-Feld, ein Hocheffizienz-Kurztraining-Feld, ein Hocheffizienz-Langtraining-Feld und ein Daten-Feld umfasst.

8. Verfahren nach Anspruch 7, wobei das "Legacy"-Präambel-Feld, das Wiederholtes-"Legacy"-Signal-Feld und das Hocheffizienz-Signal-A-Feld wiederholt auf jeder Kanaleinheit empfangen werden.

9. Verfahren nach Anspruch 7 oder 8, wobei das Hocheffizienz-Signal-B-Feld auf einer Einheit von Kanaleinheit empfangen wird und das auf Kanaleinheiten empfangene Hocheffizienz-Signal-B-Feld unterschiedlich ist.

10. Verfahren nach Anspruch 9, wobei das Hocheffizienz-Signal-B-Feld in ein Hocheffizienz-Signal-B1-Feld und ein Hocheffizienz-Signal-B2-Feld unterteilt ist, das Hocheffizienz-Signal-B1-Feld auf beabstandeten Kanaleinheiten empfangen wird und das Hocheffizienz-Signal-B2-Feld auf beabstandeten Kanaleinheiten empfangen wird.

11. Verfahren nach einem der Ansprüche 1 bis 10, wobei die Kanaleinheit ein 20-MHz-Kanal ist.

12. Station, umfassend:
ein Empfangsmodul, das ausgelegt ist zum Empfangen eines Auslöserahmens, der durch einen Zugangspunkt gesendet wird, wobei der Auslöserahmen eine Kennung einer Ziel-Frequenzbereich-Ressourceneinheit, RU, die der Station zugewiesen ist, umfasst; und
ein Sendemodul, das ausgelegt ist zum Senden einer Uplink-Orthogonal-Frequenzmultiplex-Mehrfachzugriff-Bitübertragungsschicht-Protokolldateneinheit bzw. Uplink-OFDMA-PPDU, wobei ein Datenteil der Uplink-OFDMA-PPDU auf der Ziel-RU gesendet wird und eine gemeinsame Bitübertragungsschicht-Präambel der Uplink-OFDMA-PPDU auf einer oder mehreren Kanaleinheiten, in denen sich die Ziel-RU befindet, gesendet wird,
wobei das Empfangsmodul ferner ausgelegt ist zum Empfangen einer Downlink-OFDMA-PPDU, die einen Bestätigungsrahmen für die Uplink-OFDMA-PPDU umfasst, wobei der Bestätigungsrahmen auf einer RU empfangen wird, die sich in der einen oder den mehreren Kanaleinheiten befindet.

13. Zugangspunkt, umfassend:
ein Sendemodul, das ausgelegt ist zum Senden eines Auslöserahmens, wobei der Auslöserahmen eine Kennung einer Ziel-Frequenzbereich-Ressourceneinheit, RU, die einer Station zugewiesen ist, umfasst; und
ein Empfangsmodul, das ausgelegt ist zum Empfangen einer Uplink-Orthogonal-Frequenzmultiplex-Mehrfachzugriff-Bitübertragungsschicht-Protokolldateneinheit bzw. Uplink-OFDMA-PPDU, wobei ein Datenteil der Uplink-OFDMA-PPDU auf der der Station zugewiesenen Ziel-RU empfangen wird und eine gemeinsame Bitübertragungsschicht-Präambel der Uplink-OFDMA-PPDU auf einer oder mehreren Kanaleinheiten, in denen sich die Ziel-RU befindet, empfangen wird,
wobei das Sendemodul ferner ausgelegt ist zum Senden einer Downlink-OFDMA-PPDU, die einen Bestätigungsrahmen für die Uplink-OFDMA-PPDU umfasst, wobei der Bestätigungsrahmen auf einer RU gesendet wird, die sich in der einen oder den mehreren Kanaleinheiten befindet.

14. Einrichtung nach Anspruch 12 oder 13, wobei der Bestätigungsrahmen einen Ack-Rahmen, einen Block-Ack-Rahmen oder einen Mehrfach-STA-Block-Ack-Rahmen umfasst, wobei der Mehrfach-STA-Block-Ack-Rahmen einen Bestätigungsrahmen der Station umfasst.

15. Einrichtung nach einem der Ansprüche 12 bis 14, wobei, falls sich die Ziel-RU in mehreren Kanaleinheiten befindet, die gemeinsame Bitübertragungsschicht-Präambel der Uplink-OFDMA-PPDU wiederholt auf jeder der mehreren Kanaleinheiten gesendet wird.

16. Einrichtung nach einem der Ansprüche 12 bis 15, wobei die gemeinsame Bitübertragungsschicht-Präambel ein "Legacy"-Präambel-Feld, ein Wiederholtes-"Legacy"-Signal-Feld und ein Hocheffizienz-Signal-A-Feld umfasst.

17. Einrichtung nach einem der Ansprüche 12 bis 16, wobei der Datenteil ein Hocheffizienz-Kurztraining-Feld, ein Hocheffizienz-Langtraining-Feld und ein Daten-Feld umfasst.

18. Einrichtung nach einem der Ansprüche 12 bis 17, wobei die Downlink-OFDMA-PPDU ferner ein "Legacy"-Präambel-Feld, ein Wiederholtes-"Legacy"-Signal-Feld, ein Hocheffizienz-Signal-A-Feld, ein Hocheffizienz-Signal-B-Feld, ein Hocheffizienz-Kurztraining-Feld, ein Hocheffizienz-Langtraining-Feld und ein Daten-Feld umfasst.

19. Einrichtung nach Anspruch 18, wobei das "Legacy"-Präambel-Feld, das Wiederholtes-"Legacy"-Signal-Feld und das Hocheffizienz-Signal-A-Feld wiederholt auf jeder Kanaleinheit empfangen werden.

20. Einrichtung nach Anspruch 18 oder 19, wobei das Hocheffizienz-Signal-B-Feld auf einer Einheit von Kanaleinheit empfangen wird und das auf Kanaleinheiten empfangene Hocheffizienz-Signal-B-Feld unterschiedlich ist.

21. Einrichtung nach Anspruch 20, wobei das Hocheffizienz-Signal-B-Feld in ein Hocheffizienz-Signal-B 1-Feld und ein Hocheffizienz-Signal-B2-Feld unterteilt ist, das Hocheffizienz-Signal-B 1-Feld auf beabstandeten Kanaleinheiten empfangen wird und das Hocheffizienz-Signal-B2-Feld auf beabstandeten Kanaleinheiten empfangen wird.

22. Einrichtung nach einem der Ansprüche 12 bis 21, wobei die Kanaleinheit ein 20-MHz-Kanal ist.

23. Computerlesbares Speichermedium, das ein Programm speichert, wobei das Programm bei seiner Ausführung ausgelegt ist zum Bewirken, dass der Computer das Verfahren nach einem der Ansprüche 1 bis 11 durchführt.

## Revendications

1. Procédé de transmission de données, comprenant :
la réception, par une station, d'une trame de déclenchement envoyée par un point d'accès, dans lequel la trame de déclenchement comprend un identifiant d'une unité de ressource de domaine de fréquence cible, RU, attribuée à la station ;
l'envoi, par la station, d'une unité de données de protocole de couche physique à accès multiple par répartition orthogonale de la fréquence, PPDU à OFDMA, de liaison montante, dans lequel une partie de données de la PPDU à OFDMA de liaison montante est envoyée sur la RU cible, et un préambule de couche physique commun de la PPDU à OFDMA de liaison montante est envoyé sur une ou plusieurs unités de canal dans lesquelles la RU cible est située ; et
la réception, par la station, d'une PPDU à OFDMA de liaison descendante comprenant une trame d'accusé de réception pour la PPDU à OFDMA de liaison montante, dans lequel la trame d'accusé de réception est reçue sur une RU qui est dans les une ou plusieurs unités de canal.

2. Procédé de transmission de données, comprenant :
l'envoi, par un point d'accès, d'une trame de déclenchement, dans lequel la trame de déclenchement comprend un identifiant d'une unité de ressource de domaine de fréquence cible, RU, attribuée à une station ;
la réception, par le point d'accès, d'une unité de données de protocole de couche physique à accès multiple par répartition orthogonale de la fréquence, PPDU à OFDMA, de liaison montante, dans lequel une partie de données de la PPDU à OFDMA de liaison montante est reçue sur la RU cible attribuée à la station, et un préambule de couche physique commun de la PPDU à OFDMA de liaison montante est reçu sur une ou plusieurs unités de canal dans lesquelles la RU cible est située ; et
l'envoi, par le point d'accès, d'une PPDU à OFDMA de liaison descendante comprenant une trame d'accusé de réception pour la PPDU à OFDMA de liaison montante, dans lequel la trame d'accusé de réception est envoyée sur une RU qui est dans les une ou plusieurs unités de canal.

3. Procédé selon la revendication 1 ou 2, dans lequel la trame d'accusé de réception comprend une trame Ack, une trame Block Ack, ou une trame Multi-STA Block Ack, dans lequel la trame Multi-STA Block Ack comprend une trame d'accusé de réception de la station.

4. Procédé selon l'une quelconque des revendications 1 à 3, dans lequel, si la RU cible est située dans de multiples unités de canal, le préambule de couche physique commun de la PPDU à OFDMA de liaison montante est envoyé de façon répétée sur chacune des multiples unités de canal.

5. Procédé selon l'une quelconque des revendications 1 à 4, dans lequel le préambule de couche physique commun comprend un champ de préambule existant, un champ de signal existant répété, et un champ de signal A à haut rendement.

6. Procédé selon l'une quelconque des revendications 1 à 5, dans lequel la partie de données comprend un champ d'apprentissage court à haut rendement, un champ d'apprentissage long à haut rendement, et un champ de données.

7. Procédé selon l'une quelconque des revendications 1 à 4, dans lequel la PPDU à OFDMA de liaison descendante comprend en outre un champ de préambule existant, un champ de signal existant répété, un champ de signal A à haut rendement, un champ de signal B à haut rendement, un champ d'apprentissage court à haut rendement, un champ d'apprentissage long à haut rendement, et un champ de données.

8. Procédé selon la revendication 7, dans lequel le champ de préambule existant, le champ de signal existant répété, et le champ de signal A à haut rendement sont reçus de façon répétée sur chaque unité de canal.

9. Procédé selon la revendication 7 ou 8, dans lequel le champ de signal B à haut rendement est reçu sur une unité d'unité de canal, et le champ de signal B à haut rendement reçu sur des unités de canal est différent.

10. Procédé selon la revendication 9, dans lequel le champ de signal B à haut rendement est divisé en un champ de signal B1 à haut rendement et un champ de signal B2 à haut rendement, le champ de signal B1 à haut rendement est reçu sur des unités de canal espacées, et le champ de signal B2 à haut rendement est reçu sur des unités de canal espacées.

11. Procédé selon l'une quelconque des revendications 1 à 10, dans lequel l'unité de canal est un canal de 20 MHz.

12. Station, comprenant :
un module de réception, configuré pour recevoir une trame de déclenchement envoyée par un point d'accès, dans laquelle la trame de déclenchement comprend un identifiant d'une unité de ressource de domaine de fréquence cible, RU, attribuée à la station ; et
un module d'envoi, configuré pour envoyer une unité de données de protocole de couche physique à accès multiple par répartition orthogonale de la fréquence, PPDU à OFDMA, de liaison montante, dans laquelle une partie de données de la PPDU à OFDMA de liaison montante est envoyée sur la RU cible, et un préambule de couche physique commun de la PPDU à OFDMA de liaison montante est envoyé sur une ou plusieurs unités de canal dans lesquelles la RU cible est située,
dans laquelle le module de réception est en outre configuré pour recevoir une PPDU à OFDMA de liaison descendante comprenant une trame d'accusé de réception pour la PPDU à OFDMA de liaison montante, dans laquelle la trame d'accusé de réception est reçue sur une RU qui est dans les une ou plusieurs unités de canal.

13. Point d'accès, comprenant :
un module d'envoi, configuré pour envoyer une trame de déclenchement, dans lequel la trame de déclenchement comprend un identifiant d'une unité de ressource de domaine de fréquence cible, RU, attribuée à une station ; et
un module de réception, configuré pour recevoir une unité de données de protocole de couche physique à accès multiple par répartition orthogonale de la fréquence, PPDU à OFDMA, de liaison montante, dans lequel une partie de données de la PPDU à OFDMA de liaison montante est reçue sur la RU cible attribuée à la station, et un préambule de couche physique commun de la PPDU à OFDMA de liaison montante est reçu sur une ou plusieurs unités de canal dans lesquelles la RU cible est située,
dans lequel le module d'envoi est en outre configuré pour envoyer une PPDU à OFDMA de liaison descendante comprenant une trame d'accusé de réception pour la PPDU à OFDMA de liaison montante, dans lequel la trame d'accusé de réception est envoyée sur une RU qui est dans les une ou plusieurs unités de canal.

14. Appareil selon la revendication 12 ou 13, dans lequel la trame d'accusé de réception comprend une trame Ack, une trame Block Ack, ou une trame Multi-STA Block Ack, dans lequel la trame Multi-STA Block Ack comprend une trame d'accusé de réception de la station.

15. Appareil selon l'une quelconque des revendications 12 à 14, dans lequel, si la RU cible est située dans de multiples unités de canal, le préambule de couche physique commun de la PPDU à OFDMA de liaison montante est envoyé de façon répétée sur chacune des multiples unités de canal.

16. Appareil selon l'une quelconque des revendications 12 à 15, dans lequel le préambule de couche physique commun comprend un champ de préambule existant, un champ de signal existant répété, et un champ de signal A à haut rendement.

17. Appareil selon l'une quelconque des revendications 12 à 16, dans lequel la partie de données comprend un champ d'apprentissage court à haut rendement, un champ d'apprentissage long à haut rendement, et un champ de données.

18. Appareil selon l'une quelconque des revendications 12 à 17, dans lequel la PPDU à OFDMA de liaison descendante comprend en outre un champ de préambule existant, un champ de signal existant répété, un champ de signal A à haut rendement, un champ de signal B à haut rendement, un champ d'apprentissage court à haut rendement, un champ d'apprentissage long à haut rendement, et un champ de données.

19. Appareil selon la revendication 18, dans lequel le champ de préambule existant, le champ de signal existant répété, et le champ de signal A à haut rendement sont reçus de façon répétée sur chaque unité de canal.

20. Appareil selon la revendication 18 ou 19, dans lequel le champ de signal B à haut rendement est reçu sur une unité d'unité de canal, et le champ de signal B à haut rendement reçu sur des unités de canal est différent.

21. Appareil selon la revendication 20, dans lequel le champ de signal B à haut rendement est divisé en un champ de signal B1 à haut rendement et un champ de signal B2 à haut rendement, le champ de signal B1 à haut rendement est reçu sur des unités de canal espacées, et le champ de signal B2 à haut rendement est reçu sur des unités de canal espacées.

22. Appareil selon l'une quelconque des revendications 12 à 21, dans lequel l'unité de canal est un canal de 20 MHz.

23. Support de stockage lisible par ordinateur, stockant un programme, dans lequel le programme, lorsqu'il est exécuté, est configuré pour faire en sorte que l'ordinateur réalise le procédé de l'une quelconque des revendications 1 à 11.
